# DEMANDE DE BREVET EUROPEEN

(11) **EP 2 124 435 A1**
(43) Date de publication de la demande: **25.11.2009**
(21) Numéro de dépôt: 09159331.9
(22) Date de dépôt: 04.05.2009
(51) Int. Cl.: H04N 5/44

(54) **Système de télécommande à distance d'une carte électronique connectée à un écran de télévision ou moniteur et procédé d'émission de signaux de commande**

(30) Priorité: 05.05.2008 FR 0802443
(71) Demandeur: WYPLAY, 13190 Allauch (FR)
(72) Inventeur: Barbaroux, Alexandre, 13380 Plan de Cuques (FR); Luciani, Paul, 13390 Auriol (FR); Blanes, Yorick, 13100 Aix-en-Provence (FR); Vignes, Romain, 13390 Auriol (FR); Marchet, Maxime, 13015 Marseille (FR); Servignat, David, 13013 Marseille (FR); Feral, Dominique, 13600 Ceyreste (FR)
(74) Mandataire: Bentz, Jean-Paul

(57) **Abrégé**

La présente invention concerne un système de télécommande (14) pour piloter à distance, par la main (17) d'un utilisateur (16), une carte électronique (18) connectée à un écran (moniteur ou télévision). Ce système de télécommande (14) comprend au moins : un clavier (13), un processeur embarqué et un système (21) d'émission de signaux à destination de ladite carte électronique (18),

L'invention concerne aussi un procédé de reproduction du clavier (13) dudit système de télécommande (14) sur une zone (10) de taille réduite superposée à l'image de l'écran (11) ; cette image du clavier (13) à l'écran affiche de manière virtuelle, et en temps réel, la position du pouce (15) de la main (17) de l'utilisateur (16) posé sur le système de télécommande (14); cette image du clavier (13) à l'écran, dite zone (10) de taille réduite, est de préférence située dans un coin de l'écran de manière à ne pas cacher l'image diffusée.

Enfin, l'invention concerne un procédé d'émission de signaux de commande à partir d'un système de télécommande (14) piloté par la main (17) d'un utilisateur (16) à destination d'une carte électronique (18) reliée à un écran de télévision ou moniteur.

## Description

### La présente invention concerne :

Un système de télécommande pour piloter à distance, par la main d'un utilisateur, une carte électronique connectée à un écran (moniteur ou télévision); ce système de télécommande comprend au moins un clavier, un processeur embarqué et un système d'émission de signaux à destination de ladite carte électronique, et

Un procédé de reproduction du clavier dudit système de télécommande sur une zone de taille réduite superposée à l'image de l'écran ; sur cette image du clavier à l'écran est affichée de manière virtuelle, et en temps réel, la position du doigt de la main de l'utilisateur posé sur le système de télécommande ; cette image du clavier à l'écran, dite zone de taille réduite, est de préférence située dans un coin de l'écran de manière à ne pas cacher l'image diffusée.

Les télécommandes connues à ce jour présentent un clavier comprenant un certain nombre de touches correspondant chacune à une fonction. L'utilisateur qui veut changer de chaîne, le volume, la couleur, le contraste etc.... doit toujours regarder le clavier pour appuyer une touche et avoir accès à sa fonction et doit donc décrocher son regard de l'écran de télévision un certain temps, c'est-à-dire de quelques millisecondes pour un utilisateur rapide à quelques secondes pour un utilisateur lent.

Ce changement peut se dérouler en deux étapes essentielles se rapportant au souhait de l'utilisateur de quitter, par exemple, son programme en cours et d'aller vers le programme suivant :
**une étape de sélection :** l'utilisateur qui regarde un programme d'une chaîne et souhaite changer de chaîne va prendre la télécommande dans sa main ; il quitte alors l'écran de télévision de ses yeux, la télécommande étant dans sa main et étant regardée ; son pouce effleure ledit clavier en le regardant afin de chercher la touche qui va lui permettre de passer au programme suivant :
   une étape de validation : une fois la touche souhaitée trouvée sur le clavier selon l'étape ci-dessus, l'utilisateur va appuyer avec son pouce sur la touche sélectionnée afin de passer au programme de la chaîne souhaitée en regardant immédiatement l'écran afin de visualiser l'image et confirmer à lui-même qu'il a bien réalisé l'étape de validation.

Pour être plus exhaustif, lors de l'étape de sélection, l'oeil de l'utilisateur se déplace en permanence entre l'écran de l'appareil de télévision et le clavier de la télécommande afin d'appuyer sur la touche souhaitée pour modifier les critères de fonctions choisies par l'utilisateur. L'utilisateur perd les images du programme qui défilent sur l'écran pendant le temps qu'il passe à fixer le clavier pour chercher la touche requise puis appuyer sur la touche lors de l'étape de validation.

Dans ce cas d'utilisation de télécommande, il est indispensable que ces étapes de sélection et de validation s'effectuent dans une ambiance visuelle diurne ou éclairée puisqu'il faut regarder le clavier de la télécommande à chaque changement.

De manière générale, les claviers de ces télécommandes sont munis d'une cinquantaine de touches pour piloter l'ensemble des fonctionnalités proposées par l'appareil électronique. Hors, dans la majorité des cas, seules quelques touches sont nécessaires, environ huit, rendant les quarante et quelques autres peu usitées. Par conséquent, la perception de l'utilisation de la télécommande reste complexe pour l'utilisateur moyen qui ne connaît pas la fonctionnalité des dites touches.

La présente invention a pour but de remédier aux inconvénients cités ci-dessus.

Elle concerne un système de télécommande pour piloter à distance, par la main d'un utilisateur, une carte électronique connectée à un écran de télévision ou un moniteur, le dit système de télécommande comprend au moins un clavier comprenant une pluralité de touches, un processeur embarqué, un système d'émission de signaux à destination de ladite carte électronique, et est **caractérisé en ce que** le clavier comprend un moyen de détection et de localisation du doigt de l'utilisateur posé sur le dit clavier permettant ainsi l'affichage à l'écran du clavier du système de télécommande et du positionnement du doigt. Ainsi, l'utilisateur ne regarde plus le système de télécommande mais uniquement l'écran ne perdant par conséquent aucune image défilant sur l'écran. Ce système de télécommande est par ailleurs facile à utiliser dans une ambiance nocturne puisque l'utilisateur regarde l'écran uniquement et plus la télécommande. Enfin, la télécommande est simple à utiliser pour l'utilisateur car la fonction de la touche apparait sur l'écran ; il n'a plus à se poser de questions s'il devait toucher malencontreusement une touche dont la fonction lui est inconnue.

Préférentiellement, l'affichage à l'écran du clavier du système de télécommande et du positionnement du doigt occupe une zone de taille réduite superposée à l'image de l'écran. En effet, cette zone de taille réduite qui va contenir l'affichage du clavier du système de télécommande et du positionnement du doigt sera regardée alors par l'utilisateur à la différence du clavier du système de télécommande situé dans sa main qui sera utilisé dans sa main mais plus regardé.

Selon un autre mode de réalisation de l'invention, la zone de taille réduite superposée à l'image de l'écran, zone qui contient l'affichage du clavier du système de télécommande et du positionnement du doigt, est positionnée dans un coin de l'écran de manière à ne pas cacher l'image diffusée. Ainsi, l'utilisateur pourra à la fois voir l'image de l'écran et la dite zone d'un simple coup d'oeil sans obstruction.

Selon un autre mode de réalisation de l'invention, le clavier comprend en outre au moins un curseur muni de son système de détection et de localisation du doigt de l'utilisateur posé sur ce dit curseur permettant ainsi l'affichage à l'écran du curseur du système de télécommande et du positionnement du doigt.

L'invention concerne aussi la carte électronique qui comprend un processeur électronique et sa mémoire associée dans laquelle sont stockés l'image du clavier de la télécommande, une image virtuelle d'un doigt et de pictogrammes caractérisant des actions associées à chaque touche, l'ensemble (l'image du clavier de la télécommande, image virtuelle d'un doigt et de pictogrammes) étant affiché dans une zone de taille réduite superposée à l'image de l'écran lorsque l'utilisateur effleure le clavier de la télécommande. Cette carte électronique est indispensable au bon fonctionnement du système de télécommande tel que décrit ci-dessus.

Par ailleurs, la carte électronique a la capacité de modifier la fonction associée à chaque touche de la télécommande et donc de modifier le pictogramme superposé à chaque touche.

Egalement, la carte électronique a la capacité de lire une séquence sonore associée à chaque fonction lorsque l'utilisateur effleure une touche de manière à ce qu'une information sonore vienne compléter l'information visuelle donnée par le pictogramme. Cette fonctionnalité est intéressante à être utilisée quand l'utilisateur est mal voyant ou non voyant, l'information n'est plus mentionnée en langage écrit appelé « braille » sur les touches mais est auditive pour l'utilisateur mal ou non voyant.

Enfin, L'invention concerne également un procédé d'émission de signaux de commande à partir d'un système de télécommande piloté par la main d'un utilisateur à destination d'une carte électronique reliée à un écran de télévision ou moniteur, procédé qui consiste à :
+ effleurer une touche du clavier du système de télécommande permettant à ladite carte d'afficher ledit clavier avec ses pictogrammes et le positionnement du doigt de la main de l'utilisateur sur la touche effleurée, l'ensemble étant alors affiché dans une zone de taille réduite superposée à l'image de l'écran ;
+ appuyer le doigt sur la touche effleurée validant l'action de la touche ;
+ soulever le doigt du clavier permettant à ladite carte de supprimer l'affichage de la zone de taille réduite superposée à l'image de l'écran.

Selon un autre mode de réalisation du procédé de l'invention, celui-ci consiste à, après effleurement d'une touche du clavier du système de télécommande, ce que l'utilisateur peut déplacer son doigt vers une autre touche du clavier, ladite carte affichant alors le déplacement du doigt vers cette nouvelle touche dans la zone de taille réduite superposée à l'image de l'écran. Ce mode de réalisation du procédé de l'invention est intéressant lorsque le doigt de l'utilisateur n'a pas trouvé en une seule fois la touche souhaitée à l'inverse de l'option du **paragraphe précédent ou l'utilisateur trouve** immédiatement la touche souhaitée. Il est effectivement souhaitable que le doigt se déplace sur le clavier et apparaisse à l'écran jusqu'à se positionner sur la touche souhaitée, désirée.

Le système de télécommande, la carte électronique et le procédé d'émission de signaux de l'invention sont particulièrement utiles pour l'utilisateur dans principalement trois cas décrits ci-dessous. L'utilisateur peut donc appuyer sur la télécommande qu'il a dans sa main sans avoir à la regarder puisque cette dernière est affichée à l'écran de l'appareil de télévision. Cela permet à l'utilisateur de :
Garder toujours ses yeux fixés sur la télévision puisque la télécommande apparait sur l'écran et ne rien perdre des images qui passent sur l'écran ;
Faciliter l'utilisation de la télécommande dans un environnement sombre où il est très difficile de voir les touches de la télécommande et leurs fonctions associées ;
Changer les fonctions associées aux touches de la télécommande suivant ce qui est affiché à l'écran comme par exemples une liste déroulante, une vidéo etc.....

D'autres avantages et caractéristiques de l'invention apparaitront ci-dessous à l'examen de la description détaillée d'un mode de mise en oeuvre non limitatif et des dessins annexés sur lesquels :
La figure 1 est une vue schématique générale de l'écran de télévision et de la zone réduite apparaissant sur l'écran selon l'invention ;
La figure 2 est une vue schématique générale des éléments nécessaires au bon fonctionnement de l'invention ;
**La** **figure** 3 est une vue schématique générale du système de télécommande selon l'invention.

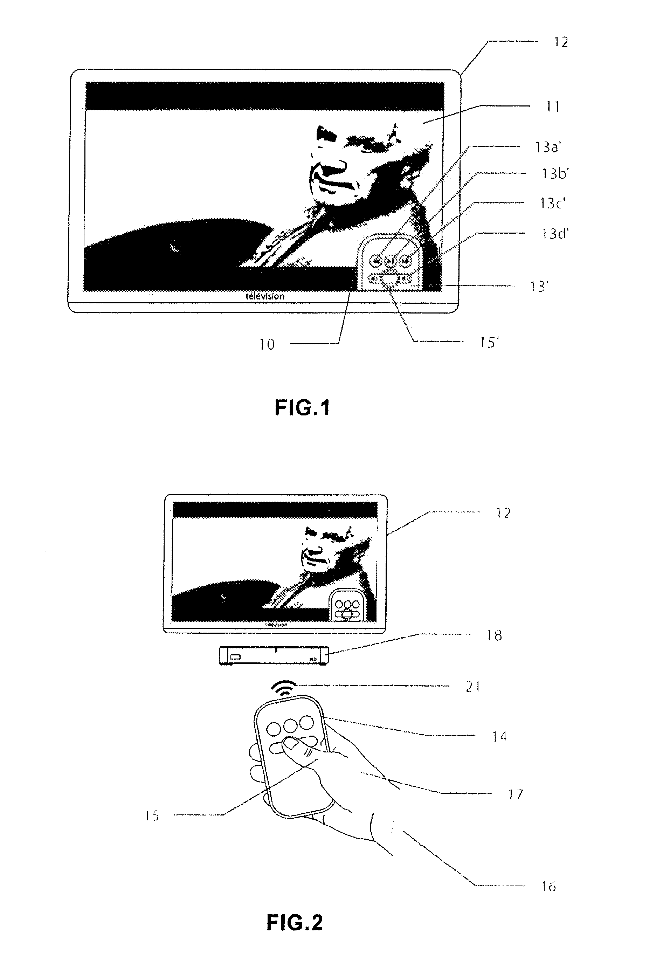

L'objectif de cette invention est de faire apparaître selon la figure 1 dans une zone 10, superposée à l'image 11 de la télévision 12, le clavier 13 de la télécommande 14 avec le positionnement en temps réel du pouce 15 de l'utilisateur 16 sur ce dernier 13. Cette zone 10 est de petite taille, située de préférence dans un coin de l'image 11 de la télévision 12, de manière à ne pas cacher l'image 11 de la télévision 12.

Selon la figure 2, l'utilisateur 16 peut donc appuyer sur la télécommande 14 qu'il a dans la main 17, sans avoir à la regarder, puisque cette dernière est affichée à l'écran. Cela permet ainsi :
de garder toujours ses yeux fixés sur la télévision 12 (selon la figure 1),
de faciliter l'utilisation de sa télécommande 14 dans un environnement sombre où il est très difficile de voir les touches de la télécommande 14 et leurs fonctions associées,
de changer les fonctions associées aux touches de la télécommande 14 suivant ce qui est affiché à l'écran comme par exemple une Liste déroulante, une vidéo....

Le produit de l'invention selon la figure 2 est constitué d'une télécommande 14 et un appareil électronique 18 connecté à la télévision 12. Cet appareil 18 peut être un lecteur DVD, récepteur satellite, enregistreur numérique, etc....plus communément appelé par l'homme du métier un « CE Device ».

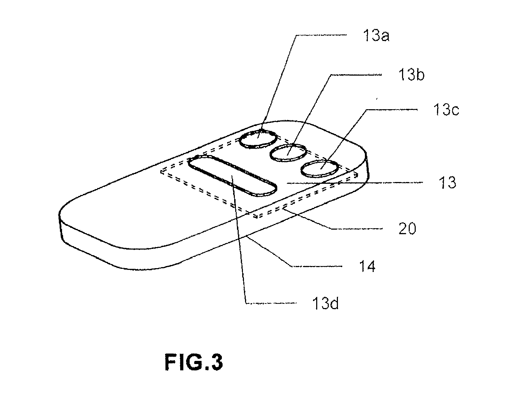

La télécommande 14 selon la figure 3 comprend :
une batterie (non dessinée),
une puce électronique (non dessinée),
un clavier 13 comprenant au moins 3 touches, 13a, 13b, 13c et au moins 1 curseur 13d ; le clavier 13 est capable de détecter quand le pouce effleure une touche ou un curseur ; le curseur apportant une fonctionnalité complémentaire à celle de la touche à savoir une notion de localisation du doigt sur l'axe du curseur,
un moyen de détection et de localisation 20 du pouce 15 de l'utilisateur 16 posé sur le dit clavier 13 permettant ainsi l'affichage à l'écran du clavier 13 du système de télécommande 14 et du positionnement du pouce 15,
un émetteur 21 pour transmettre vers le « CE Device » 18 les informations de Sélection et de Validation,

Le « CE Device » 18 tel que représenté à la figure 2 est équipé d'un récepteur (compatible avec l'émetteur de la télécommande) et a la capacité de superposer à l'image 11 de la télévision 12 une zone 10 de petite taille représentant les touches 13a, 13b, 13c et ou curseur 13d de la télécommande 14 avec le positionnement en temps réel du pouce 15 de l'utilisateur 16 sur une touche 13a , 13b, 13c, ou un curseur 13d. Il comprend un processeur électronique et sa mémoire associée dans laquelle est stockée l'image du clavier 13 de la télécommande 14, une image virtuelle d'un pouce 15 et de pictogrammes 19 (selon la figure 1) caractérisant des actions associées à chaque touche 13a, 13b, 13c, l'ensemble étant affiché dans une zone 10 de taille réduite superposée à l'image 11 de l'écran lorsque l'utilisateur 16 effleurera le clavier 13 de la télécommande 14.

Par ailleurs, le « CE Device » 18 a la capacité de lire une séquence sonore associée à chaque fonction lorsque l'utilisateur 16 effleure une touche 13a, 13b, 13c de manière à ce qu'une information sonore vienne compléter l'information visuelle donnée par le pictogramme 19.

Le procédé de réalisation de l'invention tel que montré à la figure 2 nécessite une télécommande 14 et un appareil électronique 18 relié à un écran de télévision 12. Cet appareil 18 peut être un lecteur DVD, récepteur satellite, enregistreur numérique, etc....plus communément appelé par l'homme du métier un « CE Device », comme déjà mentionné plus haut.

Lorsque l'utilisateur 16 avec sa main 17 effleure le clavier 13 de la télécommande 14 (phase de Sélection), le clavier 13 de la télécommande 14 s'affiche à l'écran en surimpression avec le positionnement du pouce 15.

Si l'utilisateur 16 déplace son pouce 15 sur le clavier 13 (toujours phase de Sélection), l'image du pouce 15 affichée dans la zone 10 sur l'écran se déplace de touches en touches 13a, 13b, 13c ou sur le curseur 13d suivant le positionnement réel du pouce 15 sur la télécommande 14.

Si la main 17 de l'utilisateur 16 appuie sur une touche 13a ou 13b ou 13c ou sur un curseur 13d (phase de Validation), le « CE Device » 18 effectue l'action demandée en appuyant sur le moyen de détection et de localisation 20 du pouce 15 de l'utilisateur 16 posé sur le dit clavier 13 permettant ainsi l'affichage à l'écran de télévision 12 du clavier 13 du système de télécommande 14 et du positionnement du pouce 15.

Dès que la main 17 de l'utilisateur 16 enlève son pouce 15 du clavier 13, la zone 10 représentant le clavier 13 à l'écran 11 disparaît.

Bien sûr, l'invention n'est pas limitée aux exemples qui viennent d'être décrits et de nombreux aménagements peuvent être apportés à ces exemples sans sortir du cadre de l'invention.

## Revendications

1. Système de télécommande (14) pour piloter à distance, par la main (17) d'un utilisateur (16), une carte électronique (18) connectée à un écran de télévision (12) ou un moniteur, le dit système de télécommande (14) comprenant au moins:
Un clavier (13) comprenant une pluralité de touches (13a, 13b, 13c),
Un processeur embarqué,
Un système d'émission (21) de signaux à destination de ladite carte électronique (18),
**caractérisé en ce que** le clavier (13) comprend un moyen de détection et de localisation (20) du pouce (15) de l'utilisateur (16) posé sur le dit clavier (13) permettant ainsi l'affichage à l'écran du clavier (13) du système de télécommande (14) et du positionnement du pouce (15), et **en ce que** la carte électronique (18) a la capacité de modifier la fonction associée à chaque touche (13a, 13b, 13c) de la télécommande (14) et donc de modifier le pictogramme (19) superposé à chaque touche (13a, 13b, 13c).

2. Système de télécommande (14) selon la revendication 1
**caractérisé en ce que** l'affichage à l'écran du clavier (13) du système de télécommande (14) et du positionnement du pouce (15) occupe une zone (10) de taille réduite superposée à l'image de l'écran de télévision (12) ou moniteur.

3. Système de télécommande (14) selon la revendication 2
**caractérisé en ce que** la zone (10) de taille réduite superposée à l'image de l'écran (11) est positionnée dans un coin de l'écran de manière à ne pas cacher l'image diffusée.

4. Système de télécommande (14) selon la revendication 1
**caractérisé en ce que** le clavier (13) comprend en outre au moins un curseur (13d) muni de son système de détection et de localisation (20) du pouce (15) de l'utilisateur (16) posé sur le dit curseur (13d) permettant ainsi l'affichage à l'écran du curseur (13d) du système de télécommande (14) et du positionnement du pouce (15).

5. Système de télécommande (14) selon la revendication 1
**caractérisé en ce que** la carte électronique (18) comprend un processeur électronique et sa mémoire associée dans laquelle sont stockés l'image du clavier (13) de la télécommande (14) , une image virtuelle d'un pouce (15) et de pictogrammes (19) caractérisant des actions associées à chaque touche (13a, 13b, 13c), l'ensemble étant affiché dans une zone (10) de taille réduite superposée à l'image (11) de l'écran lorsque l'utilisateur (16) effleurera le clavier (13) de la télécommande (14).

6. Système de télécommande (14) selon la revendication 1
**caractérisé en ce que** la carte électronique (18) a la capacité de lire une séquence sonore associée à chaque fonction lorsque l'utilisateur (16) effleure une touche (13a, 13b, 13c) de manière à ce qu'une information sonore vienne compléter l'information visuelle donnée par le pictogramme (19).

7. Procédé d'émission de signaux de commande à partir d'un système de télécommande (14) piloté par la main (17) d'un utilisateur (16) à destination d'une carte électronique (18) reliée à un écran de télévision (12) ou moniteur selon l'une quelconque des revendications précédentes
**caractérisé en ce que** le procédé consiste à :
+ effleurer une touche (13a, 13b, 13c) du clavier (13) du système de télécommande (14) permettant à ladite carte (18) d'afficher ledit clavier (13) avec ses pictogrammes (19) et le positionnement du pouce (15) de la main (17) de l'utilisateur (10) sur la touche (13a, 13b, 13c) effleurée, l'ensemble étant alors affiché dans une zone (10) de taille réduite superposée à l'image (11) de l'écran ;
+ appuyer le pouce (15) sur la touche (13a, 13b, 13c) effleurée validant l'action de la touche (13a, 13b, 13c);
+ soulever le pouce (15) du clavier (13) permettant à ladite carte électronique (18) de supprimer l'affichage de la zone (10) de taille réduite superposée à l'image de l'écran (11).

8. Procédé d'émission de signaux de commande selon la revendication 8
**caractérisé en ce que** le procédé consiste à : après effleurement d'une touche (13a, 13b, 13c) du clavier (13) du système de télécommande (14), l'utilisateur (16) peut déplacer son pouce (15) vers une autre touche (13a, 13b, 13c) du clavier (13), ladite carte électronique (18) affichant alors le déplacement du pouce (15) vers cette nouvelle touche (13a, 13b, 13c) dans la zone (10) de taille réduite superposée à l'image de l'écran (11).
